(19) **Europäisches Patentamt / European Patent Office / Office européen des brevets**

(11) **EP 1 902 579 B1**

(12) **FASCICULE DE BREVET EUROPEEN**

(45) Date de publication et mention de la délivrance du brevet:
**17.06.2015 Bulletin 2015/25**

(51) Int Cl.:
***H04M 9/00*** *(2006.01)*    ***H04M 9/08*** *(2006.01)*

(21) Numéro de dépôt: **06778788.7**

(22) Date de dépôt: **05.07.2006**

(86) Numéro de dépôt international:
**PCT/FR2006/001608**

(87) Numéro de publication internationale:
**WO 2007/006920 (18.01.2007 Gazette 2007/03)**

(54) **PROCEDE ET DISPOSITIF DE TRAITEMENT D'ECHOS FORTS, NOTAMMENT DANS DES TERMINAUX TELEPHONIQUES EN "MAINS LIBRES"**

VERFAHREN UND EINRICHTUNG ZUM VERARBEITEN VON STARKEN ECHOS INSBESONDERE IN FREIHAND-TELEFONENDGERÄTEN

METHOD AND DEVICE FOR PROCESSING STRONG ECHOES, IN PARTICULAR IN HANDSFREE TELEPHONE TERMINALS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **11.07.2005 FR 0507384**

(43) Date de publication de la demande:
**26.03.2008 Bulletin 2008/13**

(73) Titulaire: **Orange**
**75015 Paris (FR)**

(72) Inventeurs:
• **LE TOURNEUR, Grégoire**
**F-22700 St Quay-Perros (FR)**
• **THOMAS, Jean-Philippe**
**F-22660 Trevou Treguignec (FR)**
• **GARCIA, Jean-Luc**
**F-22300 Lannion (FR)**

(74) Mandataire: **Cabinet Plasseraud**
**52, rue de la Victoire**
**75440 Paris Cedex 09 (FR)**

(56) Documents cités:
**US-A- 5 901 230       US-A- 6 125 179**
**US-A1- 2003 118 178**

## Description

L'invention concerne le traitement numérique de signaux sonores, en particulier la détection de conditions pouvant entraîner un phénomène dit *"d'écho fort"*, notamment dans des terminaux téléphoniques en "*mains libres*", ou encore dans les systèmes de visioconférence, dans les passerelles de voix sur IP (pour "*Internet Protocole*"), dans les centres d'appels téléphoniques, ou autres.

L'écho acoustique est un obstacle majeur au bon fonctionnement, en mains libres, d'équipements de télécommunication (en communication audio ou en visioconférence), par exemple sur des terminaux, sur des ordinateurs de type PC, sur stations ou sur toute autre machine comportant au moins un haut-parleur et un microphone. Cet écho acoustique résulte du signal émis par le haut-parleur et capté par le microphone.

Le fonctionnement en mains libres pose également un problème de dynamique pour les signaux traités car le niveau sur le microphone varie dans une très large plage. Cette forte variation de niveau est due à l'éloignement ou le rapprochement du locuteur par rapport au microphone, ainsi qu'à la naturelle variété de puissance de parole entre individus. Il en va de même sur le signal haut-parleur, lorsque l'on cherche à avoir un niveau de restitution sonore élevé, ou sur les fortes attaques de mots.

Il se produit alors des phénomènes de saturation et de distorsion, préjudiciables au traitement de l'écho. Cet écho résiduel est perceptible et très gênant en communication.

Quelques tentatives de l'art antérieur pour résoudre ces problèmes sont exposées ci-après.

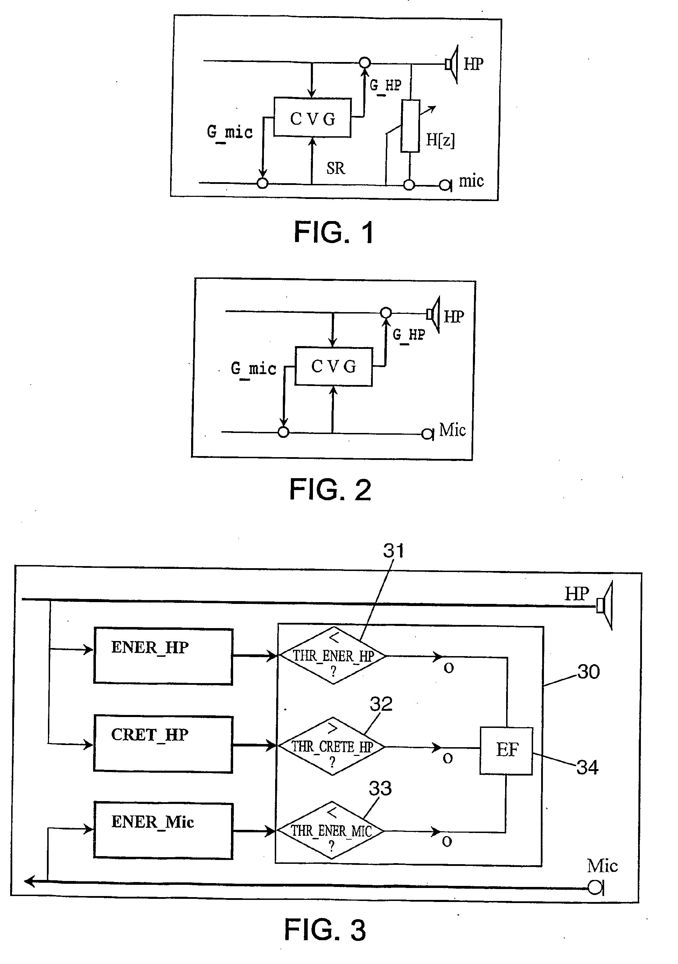

De manière générale, un traitement classique pour éviter l'écho se base sur une annulation d'écho à partir d'un filtrage adaptatif comme représenté sur la figure 1 relative à l'art antérieur.

La figure 1 illustre schématiquement la structure d'un système de traitement d'écho monovoie à base :

- de filtrage adaptatif H[z], et
- de variation de gain associée CVG, entre le gain G_mic appliqué au signal du microphone mic et le gain G_HP appliqué au signal du haut-parleur HP.

En variante, un autre traitement classique se base sur une suppression d'écho à partir d'une variation de gain pure comme présenté en figure 2 également relative à l'art antérieur, sur laquelle on a représenté la structure d'un système de traitement d'écho monovoie simplement à base de variation de gain seule CVG.

Néanmoins, dans les deux cas (figure 1 et figure 2), l'apparition de signaux forts perturbe le fonctionnement des systèmes.

En conversation normale, l'écho est généralement imperceptible. Cependant, sur des bruits impulsifs ou sur de fortes attaques de mots, il existe un risque de retour d'écho perceptible et gênant. Pour expliquer brièvement cet effet, on indique ici que le retour d'écho précité est lié à l'apparition de phénomènes non linéaires dans la chaîne audio (saturations) et au temps de réaction du système pour appliquer un affaiblissement suffisant et, de là, compenser cet écho fort.

Les systèmes existants sont basés sur un compromis de choix de réglage du traitement de l'écho :

- soit l'interactivité est privilégiée, avec un affaiblissement moyen à faible, ce qui risque de générer des retours d'écho pour des conditions extrêmes,
- soit l'écho est toujours éliminé, avec un affaiblissement fort, mais au détriment de l'interactivité de la communication dans les conditions d'utilisation habituelles.

En effet, pour garantir un niveau d'interactivité dans la communication, l'affaiblissement appliqué doit être choisi le plus faible possible, qu'il soit appliqué :

- sur le signal d'écho (dans le cas de variation de gain seule comme représenté sur la figure 2),
- ou sur le résidu d'écho SR (pour un système à base de filtrage adaptatif avec variation de gain résiduelle comme représenté sur la figure 1).

Dans ces conditions, pour une conversation normale, l'écho sera imperceptible, tout en maintenant une interactivité optimale.

Néanmoins, sur des bruits impulsifs ou sur des fortes attaques de mots, il existera toujours un risque de retour d'écho perceptible et gênant, du fait de la faible valeur d'affaiblissement appliquée au signal résidu SR (figure 1). De plus, pour les systèmes à base de filtrage adaptatif, les phénomènes non linéaires qui engendrent de l'écho ne peuvent pas être supprimés simplement par un annuleur d'écho. Le problème devrait donc être traité par la variation de gain additionnelle en sortie de l'annuleur d'écho.

On indique en outre qu'indépendamment du type de traitement mis en oeuvre (annulation d'écho comme représenté en figure 1 ou variation de gain comme représenté en figure 2), le calcul des coefficients de gain appliqué au microphone G_mic et appliqué au haut-parleur G_HP est généralement basé sur une estimation des énergies des signaux :

- alimentant le haut-parleur HP,
- issu du microphone, et
- résiduel (signal SR de la figure 1).

Ces estimations d'énergie NRJ(n), pour un signal x et un instant n, sont généralement calculées à partir d'une équation récursive de la forme :

$$NRJ(n) = \alpha*NRJ(n-1) + (1-\alpha)*x^2 \qquad (1)$$

Le paramètre $\alpha$ permet de régler le lissage de l'estimée de l'énergie. Plus ce paramètre est proche de la valeur 1, plus le lissage est fin. D'un autre côté, plus ce paramètre est faible, plus le lissage est grossier.
Un lissage fin est utile pour filtrer les fluctuations d'énergie d'un signal, mais introduit un retard pour la détection. Ce retard est très préjudiciable pour une détection rapide, notamment pour les bruits impulsifs. Un lissage grossier permet une meilleure détection, mais introduit des fluctuations dans le niveau du signal de parole, par le biais du calcul des coefficients G_HP et G_mic à partir des estimées d'énergie.
On connaît, pour tenter de pallier ce problème de constantes de lissage, des solutions faisant appel à un lissage "*court terme*" et "*long terme*" des énergies pour le contrôle de l'écho. Régler de tels systèmes consiste à choisir les valeurs de lissage des énergies, ainsi que les valeurs d'affaiblissement maximales $G_{MAX}$ pour privilégier soit l'interactivité, soit l'absence d'écho, dans toutes les conditions.
Le document US-2003/118178 décrit un système d'annulation d'écho.
Plus récemment, le document US-2003/0123674 décrit un système d'annulation d'écho et variation de gain associée, où il est question d'une profondeur d'affaiblissement maximale et minimale. Toutefois, là encore, les paramètres utilisés pour calculer cet affaiblissement ne peuvent pas prendre en compte une attaque forte du signal d'écho, comme une impulsion.
La présente invention vient améliorer la situation.
A cet effet, l'invention propose tout d'abord un procédé de traitement d'échos dans un équipement de téléphonie et/ou de visiophonie, équipement dans lequel un écho fort est susceptible de résulter d'une interaction entre au moins un haut-parleur et au moins un microphone dudit équipement.
Le procédé comporte une première étape générale, de détection d'un risque d'écho, suivie d'une seconde étape générale, de traitement incluant la suppression ou, au moins, la limitation d'un effet d'écho.
Plus particulièrement, cette première étape générale comporte au moins la détection d'une attaque forte, supérieure à un seuil prédéterminé, sur un signal alimentant le haut-parleur.
Selon une définition actuellement préférée de l'invention, la première étape précitée, pour la détection d'un risque d'écho fort, comporte, conjointement avec la détection d'attaque forte sur le signal alimentant le haut-parleur, une détection d'un niveau bas, inférieur à un seuil choisi, d'un signal issu du microphone.
On entend alors par le terme "*attaque forte*", une impulsion sonore ou électrique, intense et capable de générer un écho fort tel que défini précédemment. On comprendra ainsi que la nature de l'écho fort peut être acoustique ou électrique (résultant par exemple d'un défaut électrique ponctuel dans le circuit auxquels sont connectés le haut-parleur et/ou le microphone).
Ainsi, l'invention propose la détection d'un risque écho fort, seul, susceptible d'intervenir dans les conditions suivantes :

- une forte attaque sur le signal alimentant le haut-parleur,
- et pas ou peu de signal capté par le microphone (car l'écho ne devrait apparaître qu'après la restitution par le haut-parleur).

Le principe général à la base de l'invention consiste donc à comparer des grandeurs respectives (par exemple les énergies) à l'entrée (microphone) et à la sortie (haut-parleur) de l'équipement, pour détecter un risque de retour d'écho fort. Cette détection porte en particulier sur un signal impulsif sur la référence (forte attaque sur le signal du haut-parleur).
On comprendra donc qu'une caractéristique distinctive de l'invention consiste à tenir compte du signal capté par le microphone en cas de détection d'une attaque forte sur le signal alimentant le haut-parleur. Ainsi, au lieu de restreindre la détection uniquement à ce qui advient au niveau du haut-parleur, comme au sens de l'art antérieur, l'invention propose avantageusement de détecter en outre ce qui advient au niveau du microphone, en particulier un niveau de signal issu du microphone en-dessous d'un seuil choisi.

Ainsi, l'invention propose avantageusement de détecter le risque d'écho fort et d'appliquer un traitement ad hoc pour supprimer le retour d'écho, en sus des traitements habituels, notamment du signal résiduel. En particulier, la détection au sens de l'invention isole le cas d'écho fort seul, avantageusement pour ne pas modifier le comportement du système dans les autres états, notamment en double parole, ce qui permet de conserver un haut niveau d'interactivité en communication normale.

D'ailleurs, d'autres caractéristiques et avantages de l'invention apparaîtront à l'examen de la description détaillée ci-après, et des dessins annexés sur lesquels, outre les figures 1 et 2 relatives à l'art antérieur et décrites précédemment :

- la figure 3 est un schéma de principe d'un module de détection de risque d'écho fort dans un équipement téléphonique, pour la mise en oeuvre de l'invention,

- la figure 4 illustre schématiquement le bilan des retards dans la structure du module de traitement d'écho,

- la figure 5 représente l'insertion ad hoc du module de traitement d'écho fort au sens de l'invention, dans un dispositif général de traitement d'écho acoustique,

- la figure 6 illustre le traitement d'écho fort au sens de l'invention inséré dans une structure multivoies, et

- la figure 7 illustre un dispositif de détection et traitement d'écho, avec un traitement ad hoc d'écho fort au sens de l'invention.

En référence à la figure 3, la détection d'une attaque forte sur le signal haut-parleur consiste, dans l'exemple décrit, à analyser deux grandeurs caractéristiques du signal alimentant le haut-parleur HP, qui sont :

- l'énergie long terme (lissée) de ce signal (ENER_HP),
- et le suivi des crêtes du signal (CRET_HP).

La détection de crêtes a lieu typiquement dans les conditions suivantes :

CRET_HP > THR_CRETE_HP et ENER_HP < THR_ENER_HP,

où THR_CRETE_HP et THR_ENER_HP sont respectivement :

- un seuil de niveau de crêtes prédéterminé, et
- et un seuil d'énergie à long terme, prédéterminé.

Ainsi, en termes plus génériques, la détection d'attaque forte sur le signal alimentant le haut-parleur comporte le suivi d'un niveau de crêtes CRET_HP du signal alimentant le haut-parleur HP. L'une des conditions pour que la détection d'une attaque forte soit effective consiste déjà en ce que ce niveau de crêtes CRET_HP est supérieur au seuil de niveau de crêtes précité THR_CRET_HP.

En outre, la détection d'attaque forte sur le signal alimentant le haut-parleur comporte le suivi de l'énergie à long terme ENER_HP du signal alimentant le haut-parleur HP et la seconde condition pour que la détection d'une attaque forte soit effective consiste en ce que l'énergie à long terme ENER_HP est inférieure au seuil précité d'énergie à long terme THR_ENER_HP.

On comprendra ainsi que ces deux conditions reviennent au cas d'une activité moyenne assez faible sur le haut-parleur (énergie à long terme faible), suivi d'une pointe instantanée (niveau de crête élevé).

Par ailleurs, on détecte, conjointement avec l'attaque forte sur le signal de haut-parleur, le risque d'écho fort, au sens de l'invention, en vérifiant une faible activité ou une non-activité au niveau du microphone.

On choisit, dans l'exemple décrit, de mesurer cette activité à nouveau à travers l'énergie à long terme (lissée) du signal issu du microphone Mic.

Ainsi, en termes plus génériques, la détection d'un niveau bas du signal issu du microphone mic comporte au moins le suivi de l'énergie ENER_Mic du signal issu du microphone et la détection d'un niveau bas de ce signal est effective si l'énergie ENER_Mic est inférieure à un seuil d'énergie choisi THR_ENER_Mic.

On comprendra alors, en référence à la figure 3, que le module 30 de détection de risque d'écho fort au sens de l'invention, met en oeuvre conjointement :

- la détection du niveau de crêtes du signal alimentant le haut-parleur CRET_HP au-dessus du seuil de niveau de crêtes prédéterminé THR_CRET_HP (test 32),

- la détection de l'énergie à long terme du signal alimentant le haut-parleur ENER_HP en-dessous du seuil d'énergie à long terme prédéterminé THR_ENER_HP (test 31), et

- la détection de l'énergie du signal issu du microphone ENER_Mic en-dessous du seuil d'énergie choisi THR_ENER_Mic (test 33).

Si ces trois conditions sont réunies ensemble (flèches "o" en sorties des tests 31, 32 et 33), le module déclenche un signal 34 de risque d'écho fort, destiné à être interprété par un dispositif de traitement d'écho (non représenté sur la figure 3).

L'ensemble de ces trois conditions donne in fine :

**CRET_HP > THR_CRETE_HP**
et **ENER_HP < THR_ENER_HP**
et **ENER_Mic < THR_ENER_Mic**

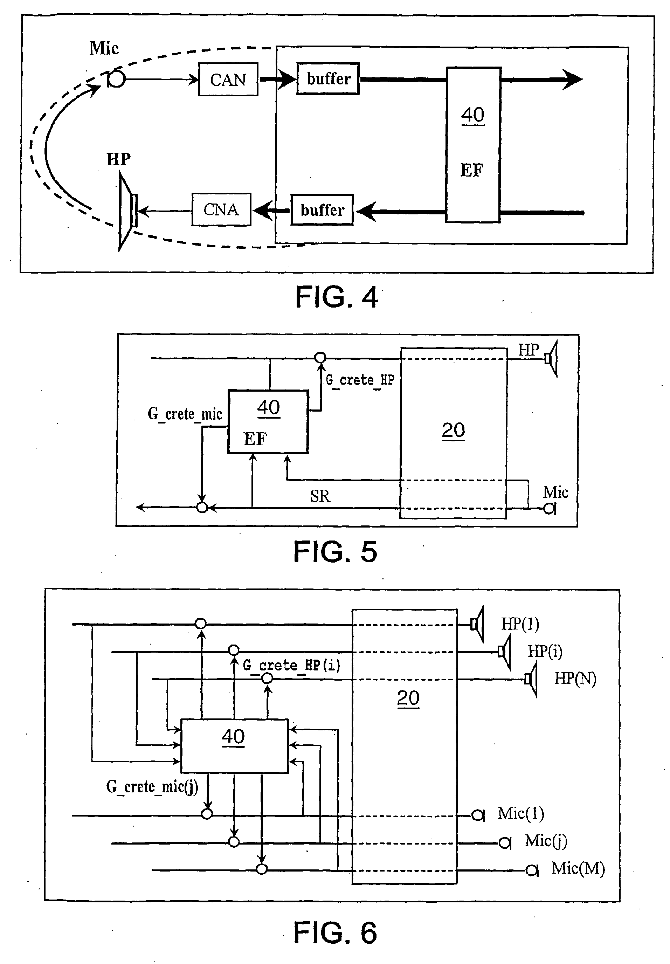

La dernière condition (ENER_Mic < THR_ENER_Mic) est avantageuse pour ne pas déclencher le mécanisme lorsque le locuteur local a pris la parole. Ainsi, on comprendra que l'invention ne prévoit avantageusement pas de modification du comportement du traitement d'écho dans les configurations autres que l'écho fort, seul, comme on le verra plus loin en référence à la figure 5:

Les seuils choisis THR_ENER_Mic, THR_ENER_HP et THR_CRET_HP peuvent être choisis fixes ou dépendants d'une fonction donnée, ou encore adaptatifs. Par exemple, dans une réalisation avantageuse, le seuil d'énergie THR_ENER_Mic peut être choisi au moins en fonction du seuil de niveau de crêtes prédéterminé THR_CRET_HP.

Lorsque les trois conditions ci-avant sont vraies, une temporisation est préférentiellement déclenchée pour maintenir un état de détection de retour d'écho fort.

Pour améliorer la détection d'écho fort, il est avantageux d'intégrer une temporisation (temps de maintien) pour tenir compte du délai entre la détection de l'écho fort et l'apparition de l'écho physique. Ce délai peut résulter du temps de propagation de l'onde acoustique entre le haut-parleur et le microphone, et/ou de la présence de mémoires tampon ("*buffers*") des signaux dans le système, comme illustré par la figure 4, sur laquelle on a représenté :

- par une flèche en trait plein un couplage acoustique direct entre le haut-parleur HP et le microphone Mic, et
- par une flèche en traits pointillés la chaîne de retard complète entre le microphone et le haut-parleur, incluant notamment les mémoires référencées buffer, ainsi que les convertisseurs analogique/numérique CAN en sortie du microphone et numérique/analogique CNA en entrée du haut-parleur.

Ainsi, en termes plus généraux, on applique préférentiellement une temporisation après la détection d'un risque d'écho fort, cette temporisation tenant compte au moins d'une distance (flèche en trait plein) et, de là, d'un temps de propagation des ondes acoustiques entre le haut-parleur et le microphone.

On décrit ci-après des exemples de traitements appliqués lors de la détection d'un risque d'écho fort.

En référence maintenant à la figure 5, un affaiblissement G_crete_mic supplémentaire est préférentiellement appliqué au signal émis pour supprimer l'écho fort de retour. Cet affaiblissement est appliqué pendant toute la durée de la temporisation déclenchée lors de la détection d'écho fort par le module 30. Cet affaiblissement est appliqué uniquement dans le cas d'un retour d'écho fort, et, comme indiqué ci-avant, ne pénalise pas le traitement global (effectué par un module 40 de traitement des échos forts au sens de l'invention et par le module supplémentaire 20 au sens de l'art antérieur) dans son fonctionnement nominal en parole locale seule, et en double parole.

En effet, le traitement de l'écho acoustique opéré par le module 20, classique, de la figure 5 est de type "*annulation d'écho*" comme décrit ci-avant en référence à la figure 1, ou peut être encore de type "*surpression d'écho*" comme décrit ci-avant en référence à la figure 2.

Un affaiblissement peut également être appliqué par le module 40 au signal haut-parleur G_crete_HP pour diminuer le risque d'écrêtage et de saturation.

Le signal utilisé pour la détection "*parole locale seule*" peut être soit le signal microphone (avant traitement d'écho), soit le signal résidu SR (après traitement d'écho). Le traitement de gain sur le haut-parleur HP est préférentiellement à insérer avant le traitement d'écho classique 20, surtout si ce dernier est de type "*annulation d'écho à base de filtrage adaptatif*", ce qui permet avantageusement de ne pas insérer un traitement non linéaire dans la chaîne acoustique.

Ainsi, en termes plus généraux, une diminution de gain (affaiblissement) est appliquée au moins au signal issu du microphone, et préférentiellement au signal alimentant le haut-parleur, après détection d'un risque d'écho fort. Cet affaiblissement est avantageusement appliqué pendant la temporisation.

Par ailleurs, selon une caractéristique avantageuse, la diminution de gain appliquée dépend de la valeur du seuil fixée pour la détection. Ainsi, plutôt que d'appliquer un affaiblissement constant lors d'une détection, la valeur d'affaiblissement dépend du seuil choisi pour le niveau (par exemple un niveau de crêtes) du signal alimentant le haut-parleur qui a servi pour la détection d'un risque d'écho fort. Le calcul de l'affaiblissement utilise par exemple une formule récursive avec un facteur d'oubli α, telle que décrite ci-avant pour le lissage des énergies (formule (1)), avec ici pour valeur objective le rapport entre un seuil de crêtes et la valeur des crêtes du signal haut-parleur, cette formule pour le calcul de gain à appliquer étant du type :

$$\text{Gain(n)} = \alpha * \text{Gain(n-1)} + (1-\alpha) * [\,(\text{Seuil\_CRETE\_HP}) / (\text{CRETE\_HP(n)})\,] \quad (2)$$

où :

- Gain(n) est la valeur de gain à appliquer à l'instant n,
- Gain(n-1) est la valeur de gain évaluée précédemment à l'instant n-1,
- $\alpha$ est le facteur d'oubli pour l'application du lissage,
- Seuil_CRETE_HP est le niveau de crêtes seuil utilisé pour la détection, et
- CRETE_HP(n) est le niveau de crêtes relevé sur le signal du haut-parleur à l'instant n.

Ainsi, plus les crêtes du signal sont supérieures au seuil de déclenchement, plus l'affaiblissement appliqué sera fort. De même, si le dépassement des crêtes est faible par rapport au seuil, l'affaiblissement appliqué sera faible également.

Le traitement est similaire pour des équipements multivoies, incluant plusieurs haut-parleurs et/ou plusieurs microphones. En général, les traitements acoustiques multivoies intègrent des mécanismes de variation de gain basés sur des estimations d'énergie sur chaque voie. Les équipements multivoies subissent, de la même manière que les équipements monovoie, les retours d'écho fort sur des attaques de mots isolés ou sur des débuts de phrases. Les caractéristiques de l'invention énoncées ci-avant s'appliquent sensiblement de la même manière aux traitements multivoies.

La figure 6 illustre l'insertion d'un module 60 détecteur de risque d'écho fort au sens de l'invention dans une structure de traitement d'écho multivoies.

Comme dans le cas en monovoie, le traitement multivoies peut être basé sur une technique de filtrage adaptatif, ou encore sur une technique de variation de gain pure, en impliquant chaque couple [haut-parleur HP(i), microphone Mic(j)] de l'équipement multivoies.

On comprendra ainsi, en terme plus généraux, que, dans le cas d'un équipement de téléphonie et/ou de visiophonie comportant une pluralité de haut-parleurs et/ou de microphones, on applique préférentiellement les étapes de détection et de traitement d'écho, de façon générale, à chaque voie définie par un couple haut-parleur/microphone.

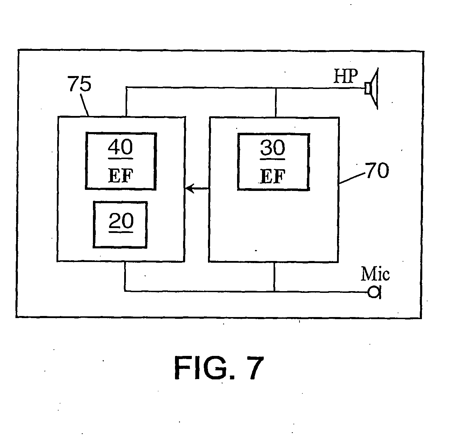

La présente invention vise aussi un dispositif tel que représenté sur la figure 7, adapté pour un équipement de téléphonie et/ou de visiophonie, monovoie ou multivoies, pour un traitement d'échos au sens de l'invention. Ce dispositif comporte des premiers moyens de détection 70 d'un risque d'écho, et des seconds moyens 75 de traitement pour la suppression ou, au moins, la limitation d'un effet d'écho. On comprendra ainsi que les seconds moyens 75, de traitement, peuvent inclure le module 40 de traitement d'échos forts au sens de l'invention, ainsi qu'un module 20 de traitement classique comme illustré sur l'une des figures 1 ou 2.

Côté détection, les premiers moyens précités 70 peuvent inclure le module de détection 30 au sens de l'invention, lequel est alors capable de détecter une attaque forte, supérieure à un seuil prédéterminé, sur le signal alimentant le haut-parleur HP. Selon l'invention, le module 30 des premiers moyens de détection 70 est capable de détecter, conjointement avec l'attaque forte sur le signal alimentant le haut-parleur, un niveau bas, inférieur à un seuil choisi, du signal issu du microphone Mic, pour la détection d'un risque d'écho fort.

Dès lors que le module 30 de détection, au moins, peut comporter un programme d'ordinateur pour la mise en oeuvre de l'invention, on comprendra que la présente invention peut viser aussi un tel produit programme d'ordinateur, dont un algorithme peut par exemple être illustré simplement par l'organigramme représenté sur la figure 3 (tests 31, 32, 33). Ainsi, ce programme est destiné à être stocké dans une mémoire d'un module de traitement d'échos d'un équipement de téléphonie et/ou de visiophonie dans lequel un écho fort est susceptible de résulter d'une interaction entre au moins un haut-parleur et au moins un microphone de l'équipement.

Ce programme comporte alors :

- au moins un premier test 32 sur une attaque forte, supérieure à un seuil prédéterminé, sur le signal alimentant le haut-parleur HP, et, selon une option avantageuse, un autre test 31 sur l'énergie de ce signal,

- et un second test 33 sur un niveau bas, inférieur à un seuil choisi, du signal qui est issu du microphone Mic, conjoint avec le premier test précité, pour une détection d'un risque d'écho fort.

**Revendications**

1. Procédé de traitement d'échos dans un équipement de téléphonie et/ou de visiophonie,
équipement dans lequel un écho fort est susceptible de résulter d'une interaction entre au moins un haut-parleur (HP) et au moins un microphone (Mic) dudit équipement,
le procédé comportant une première étape générale (30), de détection d'un risque d'écho, suivie d'une seconde étape générale (20,40), de traitement incluant la suppression ou, au moins, la limitation d'un effet d'écho,
ladite première étape générale comportant au moins la détection d'une attaque forte (32), supérieure à un seuil prédéterminé, sur un signal alimentant le haut-parleur,
dans lequel ladite première étape, pour la détection d'un risque d'écho fort, comporte, conjointement avec ladite détection d'attaque forte sur le signal alimentant le haut-parleur, une détection (33) d'un niveau bas, inférieur à un seuil choisi, d'un signal issu dudit microphone,
**caractérisé en ce que** ladite détection d'attaque forte sur le signal alimentant le haut-parleur comporte au moins le suivi d'un niveau de crêtes (CRET_HP) du signal alimentant le haut-parleur,
et la détection d'une attaque forte étant effective au moins si ledit niveau de crêtes (CRET_HP) est supérieur à un seuil de niveau de crêtes prédéterminé (THR_CRET_HP).

2. Procédé selon la revendication 1, **caractérisé en ce que** ladite détection d'attaque forte sur le signal alimentant le haut-parleur comporte en outre le suivi d'une énergie à long terme (ENER_HP) du signal alimentant le haut-parleur,
et la détection d'une attaque forte est effective en outre si ladite énergie à long terme (ENER_HP) est inférieure à un seuil d'énergie à long terme, prédéterminé (THR_ENER_HP).

3. Procédé selon l'une des revendications 1 et 2, **caractérisé en ce que** ladite détection d'un niveau bas du signal issu dudit microphone comporte au moins le suivi d'une énergie (ENER_Mic) dudit signal issu du microphone,
et la détection d'un niveau bas dudit signal est effective si ladite énergie (ENER_Mic) est inférieure à un seuil d'énergie choisi (THR_ENER_Mic).

4. Procédé selon les revendications 2 et 3, **caractérisé en ce que** la détection d'un risque d'écho fort comporte conjointement :

   - la détection dudit niveau de crêtes du signal alimentant le haut-parleur (CRET_HP) au-dessus du seuil de niveau de crêtes prédéterminé (THR_CRET_HP),
   - la détection de ladite énergie à long terme du signal alimentant le haut-parleur (ENER_HP) en-dessous du seuil d'énergie à long terme prédéterminé (THR_ENER_HP), et
   - la détection de ladite énergie du signal issu du microphone (ENER_Mic) en-dessous du seuil d'énergie choisi (THR_ENER_Mic).

5. Procédé selon la revendication 4, **caractérisé en ce que** ledit seuil d'énergie issue du microphone (THR_ENER_Mic) est choisi au moins en fonction dudit seuil de niveau de crêtes prédéterminé (THR_CRET_HP).

6. Procédé selon l'une des revendications précédentes, **caractérisé en ce que** l'on applique une temporisation après la détection d'un risque d'écho fort, ladite temporisation tenant compte au moins d'une distance entre le haut-parleur et le microphone.

7. Procédé selon l'une des revendications précédentes, **caractérisé en ce que** l'on applique une diminution de gain (40) au moins au signal issu du microphone, et préférentiellement au signal alimentant le haut-parleur, après détection d'un risque d'écho fort.

8. Procédé selon les revendications 6 et 7, **caractérisé en ce que** l'on applique ladite diminution de gain pendant la temporisation.

9. Procédé selon l'une des revendications 7 et 8, **caractérisé en ce que** la diminution de gain appliquée dépend de la valeur du seuil prédéterminé pour la détection de l'attaque forte (32) sur le signal alimentant le haut-parleur.

10. Procédé selon l'une des revendications précédentes, dans lequel ledit équipement de téléphonie et/ou de visiophonie comporte une pluralité de haut-parleurs (HP(i)) et/ou de microphones (Mic(j)), **caractérisé en ce que** l'on applique lesdites première et seconde étapes générales à chaque voie définie par un couple haut-parleur/microphone.

11. Dispositif de traitement d'échos destiné à un équipement de téléphonie et/ou de visiophonie,
équipement dans lequel un écho fort est susceptible de résulter d'une interaction entre au moins un haut-parleur et au moins un microphone dudit équipement,
le dispositif comportant des premiers moyens (70) de détection d'un risque d'écho, et des seconds moyens (75) de traitement pour la suppression ou, au moins, la limitation d'un effet d'écho,
lesdits premiers moyens étant agencés pour détecter une attaque forte, supérieure à un seuil prédéterminé, sur un signal alimentant le haut-parleur,
dans lequel les premiers moyens sont agencés pour détecter, conjointement avec l'attaque forte sur le signal alimentant le haut-parleur, un niveau bas, inférieur à un seuil choisi, d'un signal issu dudit microphone, pour la détection d'un risque d'écho fort, **caractérisé en ce que** lesdits premiers moyens sont agencés pour suivre un niveau de crêtes (CRET_HP) du signal alimentant le haut-parleur, et détecter effectivement une attaque forte au moins si ledit niveau de crêtes (CRET_HP) est supérieur à un seuil de niveau de crêtes prédéterminé (THR CRET_HP).

12. Produit programme d'ordinateur destiné à être stocké dans une mémoire d'un module de traitement d'échos d'un équipement de téléphonie et/ou de visiophonie dans lequel un écho fort est susceptible de résulter d'une interaction entre au moins un haut-parleur et au moins un microphone dudit équipement,
ledit produit programme comportant au moins un premier test (32) sur une attaque forte, supérieure à un seuil prédéterminé, sur un signal alimentant le haut-parleur,
comportant un second test (33) sur un niveau bas, inférieur à un seuil choisi, d'un signal issu dudit microphone, conjoint avec le premier test sur l'attaque forte sur le signal alimentant le haut-parleur, pour une détection d'un risque d'écho fort, **caractérisé en ce que** ledit premier test comporte au moins le suivi d'un niveau de crêtes (CRET_HP) du signal alimentant le haut-parleur,
et la détection d'une attaque forte étant effective au moins si ledit niveau de crêtes (CRET_HP) est supérieur à un seuil de niveau de crêtes prédéterminé (THR_CRET_HP).

13. Equipement de télécommunication comportant un dispositif selon la revendication 11.

## Patentansprüche

1. Verfahren zur Echoverarbeitung in einer Telefon-und/oder Bildtelefonausrüstung,
Ausrüstung, bei der ein starkes Echo aus einer Interaktion zwischen mindestens einem Lautsprecher (HP) und mindestens einem Mikrofon (Mic) der Ausrüstung resultieren kann,
wobei das Verfahren einen ersten allgemeinen Schritt (30) der Erfassung eines Echorisikos, gefolgt von einem zweiten allgemeinen Schritt (20, 40) der Verarbeitung aufweist, der die Beseitigung, oder zumindest die Begrenzung, einer Echowirkung umfasst,
wobei der erste allgemeine Schritt mindestens die Erfassung eines starken Angriffs (32), höher als eine vorbestimmte Schwelle, auf ein den Lautsprecher speisendes Signal aufweist,
wobei der erste Schritt, für die Erfassung eines starken Echorisikos, zusammen mit der Erfassung eines starken Angriffs auf das den Lautsprecher speisende Signal eine Erfassung (33) eines niedrigen Pegels, unterhalb einer gewählten Schwelle, eines vom Mikrofon stammenden Signals aufweist, **dadurch gekennzeichnet, dass** die Erfassung eines starken Angriffs auf das den Lautsprecher speisende Signal mindestens die Überwachung eines Pegels von Spitzen (CRET HP) des den Lautsprecher speisenden Signals aufweist,
und die Erfassung eines starken Angriffs mindest dann wirksam ist, wenn der Spitzenpegel (CRET_HP) oberhalb einer vorbestimmten Pegelspitzenschwelle (THR_CRET_HP) liegt.

2. Verfahren nach Anspruch 1, **dadurch gekennzeichnet, dass** die Erfassung eines starken Angriffs auf das den Lautsprecher speisende Signal außerdem die Überwachung einer Langzeitenergie (ENER_HP) des den Lautsprecher speisenden Signals aufweist,
und die Erfassung eines starken Angriffs außerdem effektiv ist, wenn die Langzeitenergie (ENER_HP) unterhalb einer vorbestimmten Langzeitenergieschwelle (THR_ENER_HP) liegt.

3. Verfahren nach einem der Ansprüche 1 und 2, **dadurch gekennzeichnet, dass** die Erfassung eines niedrigen Pegels des vom Mikrofon stammenden Signals mindestens die Überwachung einer Energie (ENER_Mic) des vom Mikrofon stammenden Signals aufweist,
und die Erfassung eines niedrigen Pegels des Signals effektiv ist, wenn die Energie (ENER_Mic) unterhalb eines gewählten Energiepegels (THR_ENER_Mic) liegt.

4. Verfahren nach den Ansprüchen 2 und 3, **dadurch gekennzeichnet, dass** die Erfassung eines starken Echorisikos zusammen aufweist:

- die Erfassung des Spitzenpegels des den Lautsprecher speisenden Signals (CRET_HP) über der vorbestimmten Spitzenpegelschwelle (THR_CRET_HP),
- die Erfassung der Langzeitenergie des den Lautsprecher speisenden Signals (ENER_HP) unter der vorbestimmten Langzeitenergieschwelle (THR_ENER_HP), und
- die Erfassung der Energie des vom Mikrofon stammenden Signals (ENER_Mic) unter dem gewählten Energiepegel (THR_ENER_Mic).

5. Verfahren nach Anspruch 4, **dadurch gekennzeichnet, dass** die vom Mikrofon stammende Energieschwelle (THR_ENER_Mic) mindestens abhängig von der vorbestimmten Spitzenpegelschwelle (THR_CRET_HP) gewählt wird.

6. Verfahren nach einem der vorhergehenden Ansprüche, **dadurch gekennzeichnet, dass** eine Verzögerung nach der Erfassung eines starken Echorisikos angewendet wird, wobei die Verzögerung mindestens einen Abstand zwischen dem Lautsprecher und dem Mikrofon berücksichtigt.

7. Verfahren nach einem der vorhergehenden Ansprüche, **dadurch gekennzeichnet, dass** eine Verstärkungsverringerung (40) mindestens an das vom Mikrofon stammende Signal, und vorzugsweise an das den Lautsprecher speisende Signal, nach Erfassung eines starken Echorisikos angewendet wird.

8. Verfahren nach den Ansprüche 6 und 7, **dadurch gekennzeichnet, dass** die Verstärkungsverringerung während der Verzögerung angewendet wird.

9. Verfahren nach einem der Ansprüche 7 und 8, **dadurch gekennzeichnet, dass** die angewendete Verstärkungsverringerung vom Wert der vorbestimmten Schwelle für die Erfassung des starken Angriffs (32) auf das den Lautsprecher speisende Signal abhängt.

10. Verfahren nach einem der vorhergehenden Ansprüche, wobei die Telefon- und/oder Bildtelefonausrüstung eine Vielzahl von Lautsprechern (HP(i)) und/oder Mikrofonen (Mic(j)) aufweist, **dadurch gekennzeichnet, dass** der erste und der zweite allgemeine Schritt auf jeden von einem Lautsprecher/Mikrofon-Paar definierten Pfad angewendet werden.

11. Echoverarbeitungsvorrichtung, die für eine Telefon- und/oder Bildtelefonausrüstung bestimmt ist,
Ausrüstung, bei der ein starkes Echo aus einer Interaktion zwischen mindestens einem Lautsprecher und mindestens einem Mikrofon der Ausrüstung resultieren kann,
wobei die Vorrichtung erste Einrichtungen (70) zur Erfassung eines Echorisikos und zweite Verarbeitungseinrichtungen (75) zur Beseitigung oder zumindest zur Begrenzung einer Echowirkung aufweist,
wobei die ersten Einrichtungen eingerichtet sind, um einen starken Angriff, höher als eine vorbestimmte Schwelle, auf ein den Lautsprecher speisendes Signal zu erfassen,
wobei die ersten Einrichtungen eingerichtet sind, um zusammen mit dem starken Angriff auf das den Lautsprecher speisende Signal einen niedrigen Pegel, unterhalb einer gewählten Schwelle, eines vom Mikrofon stammenden Signals zur Erfassung eines starken Echorisikos zu erfassen, **dadurch gekennzeichnet, dass** die ersten Einrichtungen eingerichtet sind, um einen Spitzenpegel (CRET HP) des den Lautsprecher speisenden Signals zu überwachen und einen starken Angriff zumindest dann effektiv zu erfassen, wenn der Spitzenpegel (CRET_HP) höher als eine vorbestimmte Spitzenpegelschwelle (THR_CRET_HP) ist.

12. Computerprogrammprodukt, das dazu bestimmt ist, in einem Speicher eines Echoverarbeitungsmoduls einer Telefon- und/oder Bildtelefonausrüstung gespeichert zu werden, wobei ein starkes Echo aus einer Interaktion zwischen mindestens einem Lautsprecher und mindestens einem Mikrofon der Ausrüstung resultieren kann,

wobei das Programmprodukt mindestens einen ersten Test (32) an einem starken Angriff, oberhalb einer vorbestimmten Schwelle, auf ein den Lautsprecher speisendes Signal aufweist,

einen zweiten Test (33) auf einem niedrigen Pegel, unterhalb einer gewählten Schwelle, eines vom Mikrofon stammenden Signals, zusammen mit dem ersten Test am starken Angriff auf das den Lautsprecher speisende Signal für eine Erfassung eines starken Echorisikos aufweist,

**dadurch gekennzeichnet, dass** der erste Test mindestens die Überwachung eines Spitzenpegels (CRET_HP) des den Lautsprecher speisenden Signals aufweist,

und die Erfassung eines starken Angriffs mindestens dann effektiv ist, wenn der Spitzenpegel (CRET_HP) oberhalb einer vorbestimmten Spitzenpegelschwelle (THR_CRET_HP) liegt.

**13.** Telekommunikationsausrüstung, die eine Vorrichtung nach Anspruch 11 aufweist.

**Claims**

**1.** Method for processing echoes in a telephony and/or videophony equipment item,
equipment item in which a strong echo is likely to result from an interaction between at least one loudspeaker (HP) and at least one microphone (Mic) of said equipment item,
the method comprising a first general step (30), of detection of a risk of echo, followed by a second general step (20, 40), of processing including the suppression or, at least, the limitation of an echo effect,
said first general step comprising at least the detection of a strong onset (32), above a predetermined threshold, on a signal powering the loudspeaker,
in which said first step, for the detection of a risk of strong echo, comprises, together with said detection of strong onset on the signal powering the loudspeaker, a detection (33) of a low level, below a chosen threshold, of a signal from said microphone, **characterized in that** said detection of strong onset on the signal powering the loudspeaker comprises at least the tracking of a level of peaks (CRET_HP) of the signal powering the loudspeaker,
and the detection of a strong onset being effective at least if said level of peaks (CRET_HP) is above a predetermined level-of-peaks threshold (THR_CRET_HP).

**2.** Method according to Claim 1, **characterized in that** said detection of strong onset on the signal powering the loudspeaker further comprises the tracking of a long-term energy (ENER_HP) of the signal powering the loudspeaker, and the detection of a strong onset is furthermore effective if said long-term energy (ENER_HP) is below a predetermined long-term energy threshold (THR_ENER_HP).

**3.** Method according to one of Claims 1 and 2, **characterized in that** said detection of a low level of the signal from said microphone comprises at least the tracking of an energy (ENER_Mic) of said signal from the microphone, and the detection of a low level of said signal is effective if said energy (ENER_Mic) is below a chosen energy threshold (THR_ENER_Mic).

**4.** Method according to Claims 2 and 3, **characterized in that** the detection of a risk of strong echo comprises jointly:

- the detection of said level of peaks of the signal powering the loudspeaker (CRET_HP) above the predetermined level-of-peaks threshold (THR_CRET_HP),
- the detection of said long-term energy of the signal powering the loudspeaker (ENER_HP) below the predetermined long-term energy threshold (THR_ENER_HP), and
- the detection of said energy of the signal from the microphone (ENER_Mic) below the chosen energy threshold (THR_ENER_Mic).

**5.** Method according to Claim 4, **characterized in that** said threshold of energy from the microphone (THR_ENER_Mic) is chosen at least as a function of said predetermined level-of-peaks threshold (THR_CRET_HP).

**6.** Method according to one of the preceding claims, **characterized in that** a time delay is applied after the detection of a risk of strong echo, said time delay taking account at least of a distance between the loudspeaker and the microphone.

**7.** Method according to one of the preceding claims, **characterized in that** a gain reduction (40) is applied at least to the signal from the microphone, and preferentially to the signal powering the loudspeaker, after detection of a risk of strong echo.

8. Method according to Claims 6 and 7, **characterized in that** said gain reduction is applied during the time delay.

9. Method according to one of Claims 7 and 8, **characterized in that** the gain reduction applied depends on the value of the predetermined threshold for the detection of the strong onset (32) on the signal powering the loudspeaker.

10. Method according to one of the preceding claims, in which said telephony and/or videophony equipment item comprises a plurality of loudspeakers (HP(i)) and/or of microphones (Mic(j)), **characterized in that** said first and second general steps are applied to each channel defined by a loudspeaker/microphone pair.

11. Echo processing device intended for a telephony and/or videophony equipment item,
equipment item in which a strong echo is likely to result from an interaction between at least one loudspeaker and at least one microphone of said equipment item,
the device comprising first means (70) for detecting a risk of echo, and second processing means (75) for the suppression or, at least, the limitation of an echo effect,
said first means being arranged to detect a strong onset, above a predetermined threshold, on a signal powering the loudspeaker,
in which the first means are arranged to detect, together with the strong onset on the signal powering the loudspeaker, a low level, below a chosen threshold, of a signal from said microphone, for the detection of a risk of strong echo, **characterized in that** said first means are arranged to track a level of peaks (CRET HP) of the signal powering the loudspeaker, and effectively detect a strong onset at least if said level of peaks (CRET_HP) is above a predetermined level-of-peaks threshold (THR_CRET_HP).

12. Computer program product intended to be stored in a memory of an echo processing module of a telephony and/or videophony equipment item in which a strong echo is likely to result from an interaction between at least one loudspeaker and at least one microphone of said equipment item,
said program product comprising at least one first test (32) on a strong onset, above a predetermined threshold, on a signal powering the loudspeaker,
comprising a second test (33) on a low level, below a chosen threshold, of a signal from said microphone, together with the first test on the strong onset on the signal powering the loudspeaker, for a detection of a risk of strong echo, **characterized in that** said first test comprises at least the tracking of a level of peaks (CRET_HP) of the signal powering the loudspeaker, and the detection of a strong onset being effective at least if said level of peaks (CRET_HP) is above a predetermined level-of-peaks threshold (THR_CRET_HP).

13. Telecommunication equipment item comprising a device according to Claim 11.

**FIG. 1**

**FIG. 2**

**FIG. 3**

**FIG. 4**

**FIG. 5**

**FIG. 6**

FIG. 7

**EP 1 902 579 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2003118178 A
- US 20030123674 A